# EUROPEAN PATENT APPLICATION

(11) **EP 1 792 818 A1**
(43) Date of publication of application: **06.06.2007**
(21) Application number: 05026302.9
(22) Date of filing: 02.12.2005
(51) Int. Cl.: B62M 3/00

(54) **Shaft element and pedal crank of a Bicycle bottom bracket, crank assembly comprising such a shaft element and pedal crank and method for assembling the crank assembly**

(71) Applicant: CAMPAGNOLO S.R.L., I-36100 Vicenza (IT)
(72) Inventor: Meggiolan, Mario, 36051 Creazzo (Vicenza) (IT)
(74) Representative: Castiglia, Paolo

(57) **Abstract**

A shaft element (21,22) of a bottom bracket assembly (1) of a bicycle comprises a first end portion (29,30) having first coupling means (25,26) with another shaft element (22,21) and a second end portion (27,28) having second coupling means (43) with a pedal crank (17,18). The first coupling means (25,26) comprise a reference element and the second coupling means (43) comprise a coupling element having a predetermined angular position with respect to the reference element. Such a shaft element (21,22) is adapted to be coupled with a pedal crank (17,18) comprising coupling means (51) with said shaft element (21,22), said coupling means (51) comprising a coupling element having a predetermined angular position with respect to a middle plane of the pedal crank (17,18). The aforementioned shaft element (21,22) and the aforementioned pedal crank (17,18) make it possible to precisely achieve a predetermined angular positioning between shaft element and pedal crank at the time of assembly of a crank assembly (5,6) and, therefore, an alignment at 180° between the pedal cranks at the time of assembly of a bottom bracket assembly (1).

## Description

The present invention relates to a shaft element and to a pedal crank for a bicycle bottom bracket assembly, to a crank assembly comprising such a shaft element and pedal crank, to a bicycle bottom bracket assembly comprising the crank assembly and to a bicycle comprising the bottom bracket assembly.

The invention also relates to a device and to a method for assembling the aforementioned crank assembly and to a method for assembling the aforementioned bicycle bottom bracket assembly.

A bicycle bottom bracket essentially consists of a shaft, intended to be received in a suitable housing of a bicycle frame, and two pedal cranks - a right pedal crank and a left pedal crank, respectively - coupled with opposite end portions of the shaft.

Throughout the present description and the subsequent claims, the term "shaft element" is used to indicate one of the portions of which the shaft of the bottom bracket can consist. Moreover, the term "crank assembly" is used to indicate a shaft element and a pedal crank coupled together and the term "bottom bracket assembly" is used to indicate two crank assemblies coupled together.

A good shaft-pedal crank coupling in a bicycle bottom bracket must ensure the correct mutual angular positioning of the pedal cranks. In particular, it is important that the pedal cranks be aligned with the greatest possible precision, so that the torque provided with pedalling is exploited optimally.

In the present description and in the subsequent claims, the pedal cranks of a bicycle bottom bracket are said to be aligned when their middle axes lie on the same plane passing through the rotation axis of the bottom bracket and are angularly offset by 180°.

From abandoned patent application US 2001/0049976 it is known to align the pedal cranks making two crank assemblies each comprising a pedal crank and a half-shaft casted into a single piece, and to then couple these crank assemblies through a front toothing formed at the ends of the half-shafts to form a bottom bracket assembly.

Since the crank assemblies are made by casting, the alignment of the pedal cranks that can be obtained in the corresponding bottom bracket assembly is inaccurate, since it is not possible to set very narrow tolerances between a pedal crank and the respective shaft element.

The object of the present invention is to ensure a high precision of alignment of the pedal cranks in a bicycle bottom bracket assembly in a simple and cost-effective manner.

The present invention therefore relates to, in a first aspect thereof, a shaft element of a bicycle bottom bracket assembly comprising a first end portion having first coupling means with another shaft element and a second end portion having second coupling means with a pedal crank, characterised in that the first coupling means comprise a reference element and the second coupling means comprise a coupling element having a predetermined angular position with respect to said reference element.

Such a shaft element advantageously makes it possible to precisely obtain a predetermined angular positioning between a pedal crank and the reference element on the shaft element at the time of assembly of a crank assembly and, therefore, an alignment at 180° between the pedal cranks at the time of assembly of the bottom bracket. This result is obtained in a simple and cost-effective manner since the definition of the reference element and of the coupling element, as well as their mutual angular position can occur at the same time as the formation of the first and second coupling means on the shaft element.

Preferably, the first coupling means comprise a front toothing and the reference element is defined at a tooth or at a throat of said front toothing. More preferably, the reference element is defined by a middle plane of said tooth or throat.

Advantageously, the front toothing provides precise references to carry out subsequent processing on the shaft element, in particular to make the second coupling means and to define the aforementioned coupling element.

Preferably, the front toothing comprises teeth that are all the same. More preferably such a front toothing is a Hirth toothing.

Advantageously, this type of toothing is easy to manufacture and makes it possible to have a high precision of reference with respect to middle planes of its teeth or of its throats as well as a high precision of centring with a matching toothing of the same type.

Preferably, the front toothing comprises an even number of teeth, since this is easier to make.

In a preferred embodiment of the shaft element of the present invention the second coupling means comprise a threading having a thread end and the coupling element is defined by said thread end.

In this way it is advantageously ensured that, when the pedal crank is completely screwed onto the second end portion of the shaft element, the predetermined angular positioning of it with respect to the reference element on the shaft element is automatically achieved, possibly apart from small angular offset that can easily be detected and corrected with precision by using, for example, the assembly device of a crank assembly described below.

Preferably, the thread end lies on the middle plane of the tooth or throat that defines the reference element.

In another preferred embodiment of the shaft element of the present invention the second coupling means comprise a grooved profile and said coupling element is defined by a crest or a groove of said grooved profile.

Also in this case it is advantageously ensured that, when the pedal crank is coupled with the shaft element, the predetermined angular positioning of it with respect to the reference element on the shaft element is automatically achieved in a precise manner. Moreover, the shaft elements of the crank assemblies that form the bottom bracket assembly can be identical and thus both obtained with the same mechanical processing.

Preferably said crest or groove has a middle plane coinciding with the middle plane of the tooth or throat of the front toothing that defines the reference element.

Preferably, the grooved profile comprises a number of crests that is a multiple of the number of teeth of the front toothing and both the teeth and the throats of the front toothing are aligned with the crests or with the grooves of the grooved profile.

Advantageously, in this case each tooth and throat of the front toothing can be used to define the aforementioned reference element. Moreover, a large number of crests, and therefore of grooves, allows the shaft element to be more strength, since it is possible to use grooves with a reduced depth without prejudicing the stability of the coupling.

Alternatively, it is preferred that the grooved profile comprises the same number of crests as the number of teeth of said front toothing, each crest being aligned with a tooth or with a throat of the front toothing.

Advantageously in this case it is not necessary to pay attention to the angular position to which the pedal crank is coupled with the shaft element, because in any case it shall be aligned with the middle plane of a tooth or throat of the front toothing.

The preferred grooved profile comprises crests and grooves defined by joined curved surfaces, according to what is described in the European patent application no. 05425377.8 to the same Applicant, incorporated here in full for reference. This type of grooved profile is particularly advantageous in cases in which it must be made on components having unidirectional structural fibres, like for example in the case of the matching grooved profile on a pedal crank made from composite material to be associated with the shaft element, since the absence of sharp edges and deep grooves minimises the possibility of breaking or damage to the aforementioned unidirectional structural fibres.

Preferably, the second end portion of the shaft element has an outer diameter larger than the outer diameter of said first end portion.

This advantageously allows the performance of the coupling with the pedal crank to be improved or optimised. In particular, in the case of threaded coupling, it allows a large threaded surface to be obtained even with a small number of threads and thus allows the thickness of the pedal crank and therefore the overall axial dimension of the bottom bracket assembly to be reduced. In the case of the coupling with a grooved profile, on the other hand, it allows the number of crests and grooves to be increased for the same size in cross section, with a consequent better distribution of the tangential forces transmitted through such a coupling.

In a second aspect thereof the invention relates to a bicycle pedal crank comprising, at a coupling seat with a shaft element of a bicycle bottom bracket, coupling means with such a shaft element, characterised in that said coupling means comprise a coupling element having a predetermined angular position with respect to a middle plane of said pedal crank.

Such a pedal crank advantageously makes it possible to precisely achieve a predetermined angular positioning between its middle plane and the shaft element described above at the time of assembly of a crank assembly. Indeed, at the time of assembly, the coupling element of the pedal crank is associated with the coupling element of the shaft element, which, in turn, has a predetermined angular position with respect to the reference element defined on the same shaft element.

In a preferred embodiment of the pedal crank of the present invention, the coupling means comprise a threading having a thread end and the coupling element is defined by such a thread end.

Preferably, such a thread end lies on the middle plane of the pedal crank.

In another preferred embodiment of the pedal crank of the present invention, the coupling means comprise a grooved profile and the coupling element is defined by a crest or a groove of the grooved profile.

Preferably, such a crest or groove of the grooved profile has a middle plane coinciding with the middle plane of the pedal crank.

In a third aspect thereof the invention relates to a crank assembly comprising a shaft element and a pedal crank having the features illustrated above with reference to the shaft element and to the pedal crank according to the invention, such shaft element and pedal crank being coupled together.

In a preferred embodiment, the coupling means of the shaft element and the coupling means of the pedal crank are both sized so as to determine a coupling with interference. This advantageously ensures a locking against axial sliding, substantially preventing the pedal crank from sliding away from the shaft element during operation.

Alternatively or in addition to a coupling with interference it is possible to use suitably arranged locking means against axial sliding of the pedal crank with respect to said shaft element.

In a preferred embodiment of the pedal crank of the present invention, such locking means comprise two surfaces formed at the second end portion of the shaft element and extending radially from it and the pedal crank is positioned between, and in abutment with, said two surfaces.

In another preferred embodiment of the pedal crank of the present invention, the aforementioned locking means comprise a first annular recess formed on the shaft element at the second end portion and a second annular recess formed on the pedal crank at the coupling seat with the shaft element, and said first and second annular recess face one another so as to form a seat for a radial engagement element between the shaft element and the pedal crank.

Preferably, the second annular recess is at least partially defined by an annular wall formed on the pedal crank at an axially outer side - with reference to the configuration of the pedal crank mounted on the shaft element - of said coupling seat and in abutment against a front surface of the second end portion of the shaft element.

The radial engagement element is preferably an elastic element. Alternatively it can consist of hardenable material introduced in the aforementioned seat arranged therefor and here subjected to hardening.

In a fourth aspect thereof the invention relates to a bicycle bottom bracket assembly comprising a first and a second crank assembly coupled together, wherein at least one of said first and said second crank assembly is a crank assembly having the features illustrated above.

Preferably, the first and the second crank assembly comprise respective shaft elements of the same length.

In alternative embodiments it is however possible to foresee that the first and the second crank assembly comprise respective shaft elements of different length.

It is also possible to foresee that one of said first and said second crank assembly comprises a shaft element formed integrally with the respective pedal crank.

In a fifth aspect thereof the invention relates to a bicycle comprising a bottom bracket assembly having the features outlined above.

In particular, such a bicycle comprises a bicycle frame having a housing seat for the bottom bracket assembly, said housing seat comprising, at axially opposite sides thereof, a pair of adapter rings for mounting respective bearings operatively arranged between said housing seat and the shaft elements of said bottom bracket assembly, and an annular gasket is arranged between each of said adapter rings and said shaft elements, in an axially outer position with respect to said bearings.

Such an annular gasket advantageously allows the bearings to be insulated from the outside, protecting them from the intrusion of foreign bodies or dirt.

Preferably, the annular gasket comprises a projection adapted to cooperate in abutment with a front wall of a pedal crank of the bottom bracket assembly facing towards said housing seat.

Such a projection advantageously ensures that the gasket, resting upon said front wall of the pedal crank, is sufficiently supported even without abutment surfaces suitably provided on the shaft element.

In a sixth aspect thereof the invention relates to a device for assembling a crank assembly, said crank assembly comprising a shaft element having a reference element at a first end portion and a threading at a second end portion and a pedal crank having a threaded coupling seat for screwing engagement with said second end portion of the shaft element, said device comprising fixed support means for the pedal crank and means for driving the shaft element into rotation, characterised in that it comprises a first indicator element integral with the fixed support means and aligned with a middle plane of said pedal crank and at least one second indicator element integral in rotation with the rotation driving means.

Such a device advantageously makes it possible to simply and precisely assemble a crank assembly wherein the shaft element and the pedal crank are coupled together through threaded coupling, ensuring that the middle plane of the pedal crank has the predetermined angular positioning with respect to the reference element on the shaft element.

Preferably, the assembly device comprises a plurality of second indicator elements.

In a seventh aspect thereof the invention relates to a method for assembling a crank assembly of a bicycle bottom bracket, the crank assembly comprising:
- a shaft element having a reference element at a first end portion and first coupling means with a pedal crank at a second end portion, said first coupling means comprising a first coupling element arranged at an angle α with respect to said reference element;
- a pedal crank having a coupling seat comprising second coupling means matching said first coupling means, said second coupling means comprising a second coupling element arranged at an angle β with respect to a middle plane of said pedal crank;
said method comprising the step of associating said pedal crank with said shaft element positioning said second coupling element in a predetermined angular position with respect to said first coupling element.

Advantageously, such a method allows a crank assembly to be assembled so as to precisely obtain a predetermined angular positioning of the pedal crank with respect to the shaft element. In particular, the method makes it possible to simply assemble a crank assembly wherein the middle plane of the pedal crank is aligned with the reference element defined on the shaft element.

Preferably, the angles α and β have the same value and the step of associating the pedal crank with the shaft element comprises the step of aligning the first and the second coupling element.

In an eighth aspect thereof the invention relates to a method for assembling a bicycle bottom bracket comprising the steps of:
- assembling a first crank assembly by coupling a first shaft element with a first pedal crank, wherein said first shaft element has a first reference element lying on the middle plane of said first pedal crank;
- assembling a second crank assembly by coupling a second shaft element and a second pedal crank, wherein said second shaft element has a second reference element lying on the middle plane of said second pedal crank;
- coupling said first and second crank assembly positioning said first reference element at a predetermined angular position with respect to said second reference element.

Advantageously, through this method it is possible to achieve the alignment of the pedal cranks in the bottom bracket assembly in a simple manner and with a high degree of precision.

In a first preferred embodiment of the aforementioned method, the pedal cranks of the first and second crank assembly comprise respective pedal crank arms positioned, with respect to a plane perpendicular to the middle plane of the pedal cranks and passing through a longitudinal axis of the respective shaft elements, on the same side as the first and second reference element, and the step of coupling the first and second crank assembly comprises the step of positioning the first and second reference element at 180° with respect to each other.

In a second preferred embodiment of the aforementioned method, the pedal crank of one of said first and second crank assembly comprises a respective pedal crank arm positioned, with respect to a plane perpendicular to the middle plane of such a pedal crank and passing through a longitudinal axis of the respective shaft element, on the same side as the first reference element, and the pedal crank of the other of said first and second crank assembly comprises a respective pedal crank arm positioned, with respect to a plane perpendicular to the middle plane of such a pedal crank and passing through a longitudinal axis of the respective shaft element, on the opposite side to the second reference element, and the step of coupling said first and second crank assembly comprises the step of aligning said first and second reference element.

Further characteristics and advantages of the present invention shall become clearer from the following description of some preferred embodiments thereof, given hereafter, for indicating and not limiting purposes, with reference to the attached drawings. In such drawings:
- figure 1 is a schematic view in longitudinal section of a bottom bracket assembly comprising two crank assemblies in accordance with a first preferred embodiment of the invention, housed in a housing seat of a bicycle frame;
- figure 2 is a schematic side view of two shaft elements, coupled together, of the bottom bracket assembly of figure 1;
- figures 3a, 3b are front schematic views with parts partially removed of the shaft elements of figure 2;
- figure 4 is a front schematic view of a portion of a pedal crank of the bottom bracket assembly of figure 1;
- figure 5 is a schematic perspective view of a crank assembly of the bottom bracket assembly of figure 1;
- figure 6 is a schematic perspective view of a shaft element of the crank assembly of figure 5;
- figure 7 is a schematic view in longitudinal section and in increased scale of a detail of the bottom bracket assembly of figure 1;
- figure 8 is a schematic view in schematic longitudinal section of a bottom bracket assembly in accordance with a second preferred embodiment of the invention, housed in a housing seat of a bicycle frame;
- figure 9 is a schematic front view of a shaft element of the bottom bracket assembly of figure 8;
- figure 10 is a schematic front view of a first crank assembly of the bottom bracket assembly of figure 8;
- figure 11 is a schematic front view of a second crank assembly of the bottom bracket assembly of figure 8;
- figure 12 is a view in cross section along the line V-V of figure 8 and in enlarged scale of the bottom bracket assembly of figure 8;
- figure 13 is a schematic view in longitudinal section and in enlarged scale of a portion of the bottom bracket assembly of figure 8, which shows a first variant embodiment of the axial locking means between a shaft element and respective pedal crank;
- figure 14 is a schematic view in enlarged scale of a detail of figure 13;
- figure 15 is a schematic view in longitudinal section and in enlarged scale of a portion of the bottom bracket assembly of figure 8, which shows a second variant embodiment of the axial locking means between a shaft element and respective pedal crank;
- figure 16 is a schematic view in longitudinal section and in enlarged scale of a portion of the bottom bracket assembly of figure 8, which shows a third variant embodiment of the axial locking means between a shaft element and respective pedal crank;
- figure 17 is a schematic view in partial longitudinal section of a bottom bracket assembly of figure 1 in accordance with an alternative embodiment of the invention, housed in a housing seat of a bicycle frame;
- figure 18 is a schematic perspective view of a pedal crank of the bottom bracket assembly of figure 17;
- figure 19 is a schematic side view partially in section of a device for assembling a crank assembly in accordance with the invention;
- figure 20 is a schematic view from above of a first component of the device of figure 19;
- figure 21 is a schematic view from above of a second component of the device of figure 19;
- figure 22 is a schematic side view of a bicycle comprising a bottom bracket assembly according to the invention.

In such figures, a bicycle bottom bracket assembly in accordance with the invention is globally indicated with reference numeral 1. The bottom bracket assembly 1 essentially comprises two crank assemblies 5, 6, each comprising a pedal crank 17, 18, full or hollow, made from metal or composite material, and a hollow shaft element 21, 22.

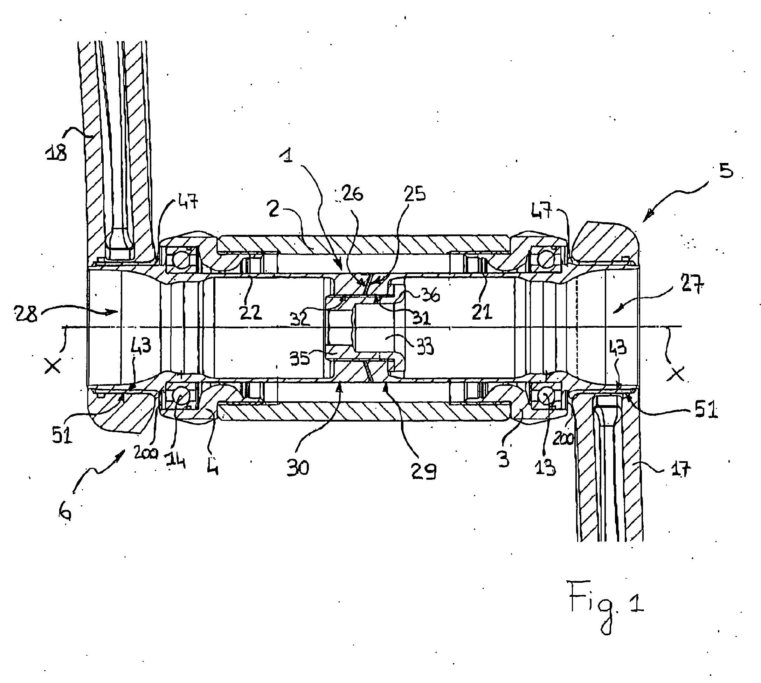

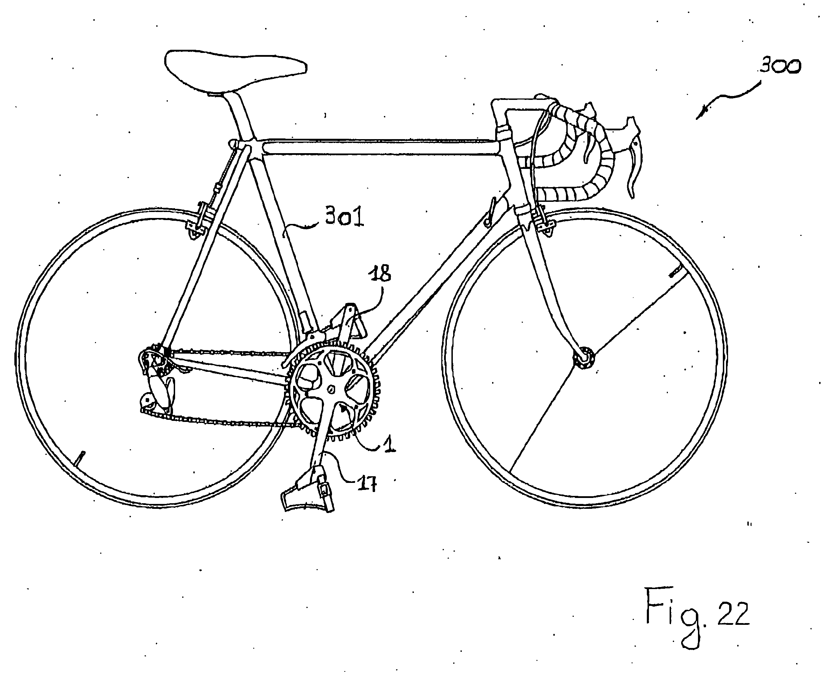

The bottom bracket assembly 1 is received in a suitable tubular housing seat 2 (figures 1, 8 and 17) formed in a frame 301 of a bicycle 300 (figure 22). In the housing seat 2 the crank assemblies 5, 6 are supported in rotation about a longitudinal axis X of the respective shaft elements 21, 22 through bearings 13, 14. The bearings 13, 14 are operatively arranged between the shaft elements 21, 22 and adaptor rings 3, 4, screwed at opposite ends of the housing seat 2 and positioned outside of it.

The crank assemblies 5, 6 are coupled together at first end portions 29, 30 of the shaft elements 21, 22. At such end portions front toothings 25, 26 are formed, preferably identical, which allow a precise centring of the crank assemblies 5, 6.

The end portions 29, 30 respectively have a through hole 31 and a threaded hole 32, coaxial with respect to the shaft elements 21, 22, for the insertion of a nut 33, which ensures that the coupling between the shaft elements 21, 22 is maintained during operation. The nut 33 is inserted in the through hole 31 and goes into abutment with a radial flange 34 thereof against an inner wall of the shaft element 21, whereas the threaded shank 35 of the nut 33 is screwed into the threaded hole 32.

Alternatively, the stability of the coupling between the shaft elements 21, 22 can be ensured through the use of an internally (or externally) threaded bushing onto which the externally (or internally) threaded end portions 29, 30 of the shaft elements 21, 22 are screwed.

Since the two crank assemblies 5, 6 essentially differ for the type of pedal crank, which in the first case is a right pedal crank and in the second case is a left pedal crank, and for the alignment between pedal crank and respective shaft element, the detailed description of a crank assembly according to the invention shall be presented hereafter with particular reference to the crank assembly 5 and it can also be applied to the crank assembly 6, unless specifically indicated otherwise.

The shaft element 21 of the crank assembly 5 extends along the longitudinal axis X and has, at the first end portion 29 thereof, the front toothing 25, preferably a Hirth toothing. In the illustrated example the front toothing 25 comprises twenty teeth 38 alternating with twenty throats 41; the number of teeth and of throats can be different, but it is preferably even.

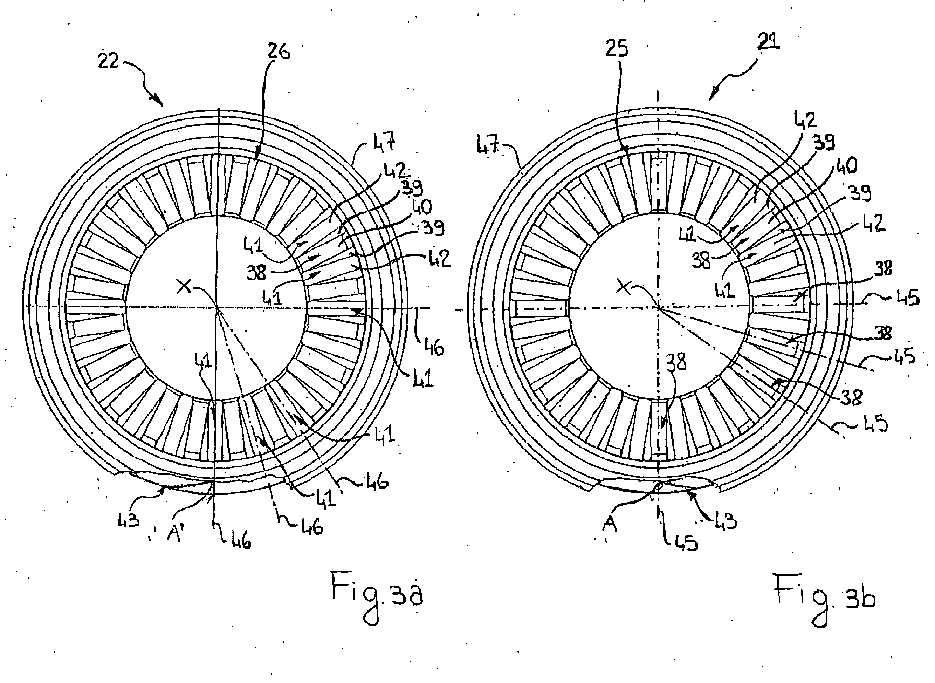

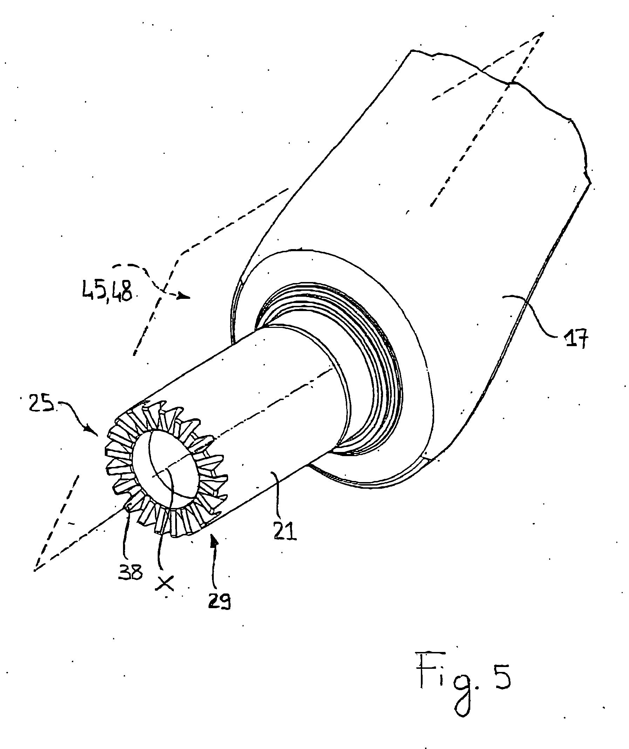

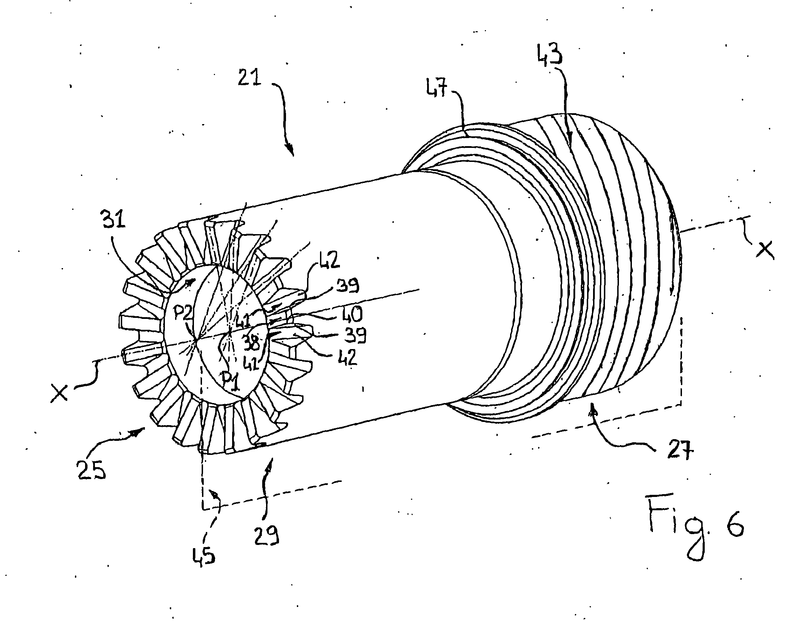

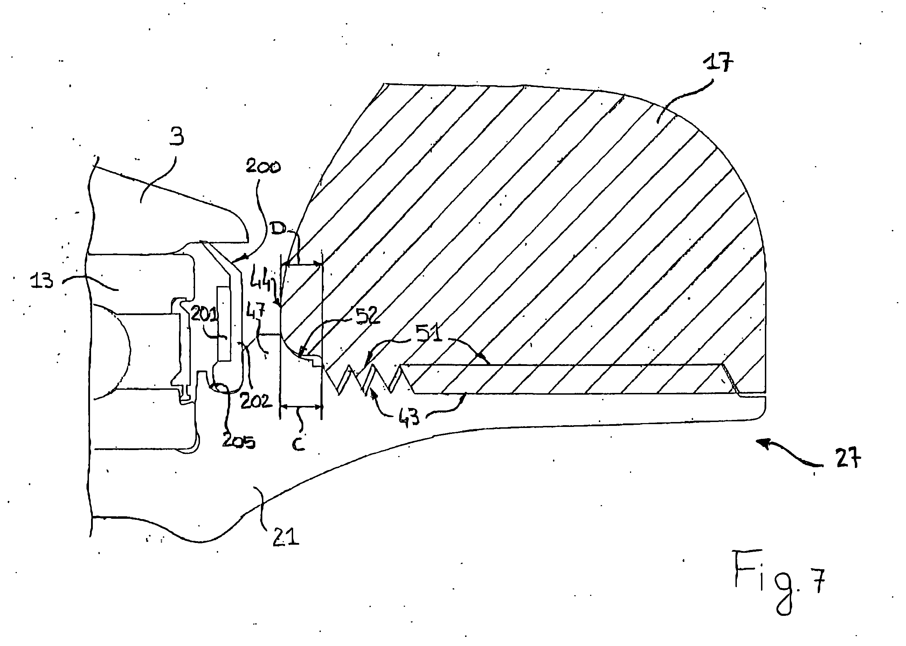

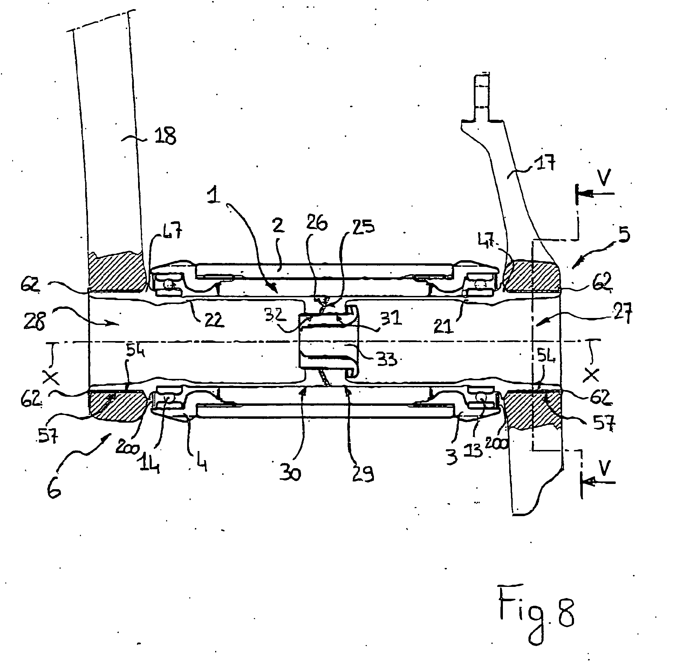

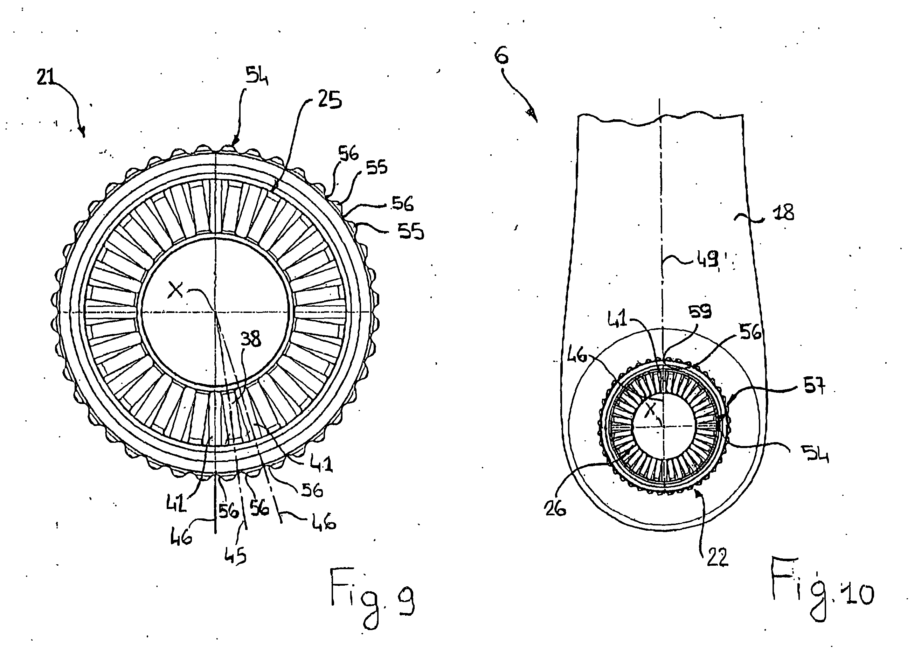

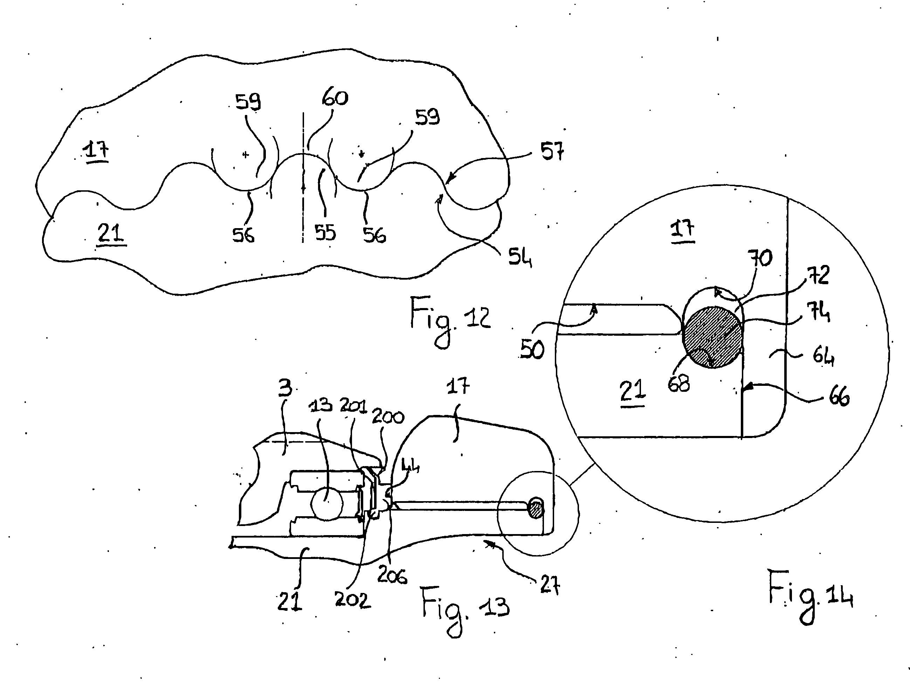

As shown in particular in figures 3a, 3b and 6, in a Hirth toothing all of the teeth 38 and all of the throats 41 are the same as one another and symmetrical. Each of the teeth 38 extends in the axial direction between a top surface 40 and two bottom surfaces 42 of the adjacent throats 41, and is laterally defined by two side surfaces 39. The top surfaces 40 of each tooth 38 lie on an ideal cone with its vertex in the point P1 on the axis X. The bottom surfaces 42 of each throat 41 also lie on an ideal cone, but with opposite concavity to the previous one, and with the vertex in the point P2, again on the axis X.

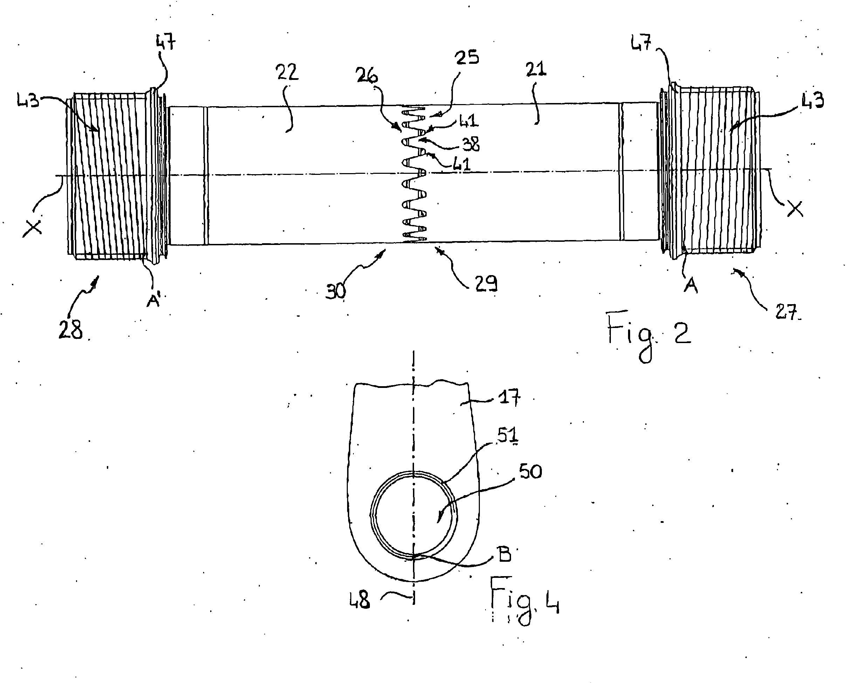

Moreover, as can be seen in particular in figures 2, 3a and 3b, the side surfaces 39 of each tooth 38 are inclined with respect to a middle plane 45 of the respective tooth passing through the axis X, so as to form a wedge, tapered both in the axial direction and in the radial direction. The tapering angle in the axial direction for a standard Hirth toothing is equal to about 60°. As a consequence of such geometry of the teeth, a coupling with Hirth-type toothing provides, in general, contact only between the side surfaces of the teeth. The coupling of all of the wedges of the front toothing 25 with those of the front toothing 26 ensures the centring of the two shaft elements 21, 22.

It is however possible to foresee embodiments wherein the teeth 38 have side surfaces 39 parallel to their middle plane 45, so as to allow the contact between the bottom surfaces 42 of the throats 41 and the top surfaces 40 of the teeth 38. In this case the centring takes place through the concavities of the aforementioned ideal cones.

At the second end portion 27, the shaft element 21 has coupling means with the pedal crank 17. In accordance with the invention, such coupling means comprise a coupling element having a predetermined angular position with respect to the middle plane 45 or 46 of any one of the teeth 38 or of any one of the throats 41, respectively, of the front toothing 25.

In a first preferred embodiment of the invention (figures 1-7), the aforementioned coupling means comprise an outer threading 43.

In the case of the shaft element 21 (figure 3b) the threading 43 has a thread end A, facing towards the front toothing 25, which lies on the middle plane 45 of any one of the teeth 38 of the front toothing 25, whereas in the case of the shaft element 22 (figure 3a) the threading 43 has a thread end A', facing towards the front toothing 26, which lies on the middle plane 46 of any one of the throats 41 of the front toothing 26.

The threading 43 is preferably a threading with narrow pitch equal to 1.25 mm.

The second end portion 27 preferably has an increased diameter compared to that of the respective first end portion 29, so as to have a sufficiently large threaded surface also with a reduced number of threads.

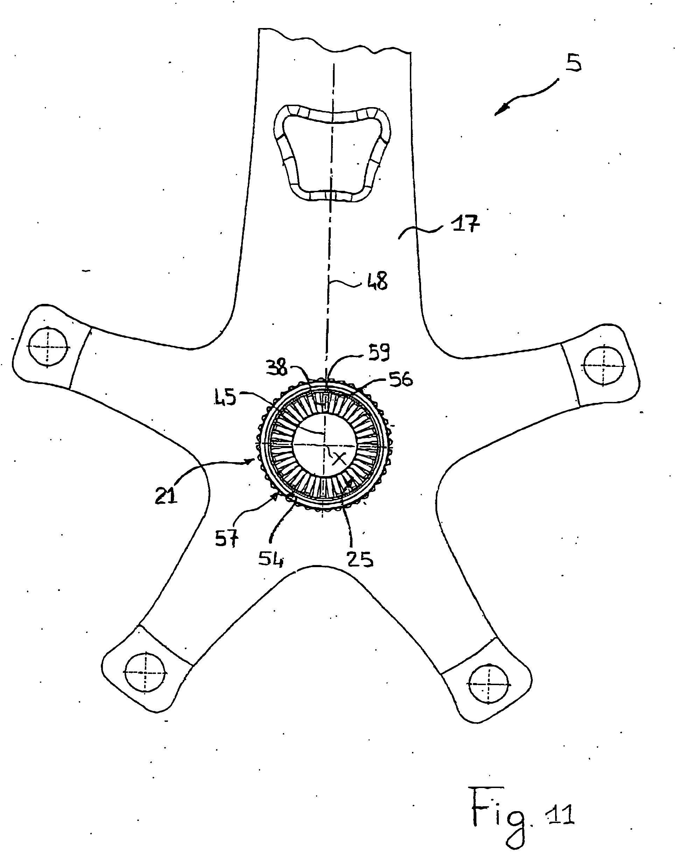

The pedal crank 17 (fig. 4), at a free end thereof, has a coupling seat 50, preferably comprising a through hole, for its assembly on the shaft element 21. In accordance with the invention, at the coupling seat 50 coupling means are defined that match those of the shaft element 21 and comprising a matching coupling element having a predetermined angular position with respect to a middle plane 48 of the pedal crank 17 passing through the axis of the coupling seat 50.

In particular, in a first preferred embodiment, the coupling means of the pedal crank comprise an inner threading 51 having a thread end B, facing towards the front toothing 25 when the pedal crank 17 is mounted on the shaft element 21 (figure 5), which lies on the middle plane 48 of the pedal crank 17.

When the pedal crank 17 is coupled with the respective shaft element 21 to form the crank assembly 5, it is aligned, in the example illustrated here, with respect to one of the teeth 38, i.e. the middle planes 45 and 48 coincide. The way in which it is obtained shall be described more clearly hereafter, with reference to a method for assembling a crank assembly according to the invention. In the same way, in the case of the crank assembly 6, the pedal crank 18 in the example illustrated here is aligned with a throat 41 of the front toothing 26, i.e. the middle planes 46 and 48 coincide.

In the case in which the front toothings 25 and 26 have an odd number of teeth 38, both of the pedal cranks 17 and 18 shall be aligned with one of the teeth 38 or with one of the throats 41 of such front toothings.

The crank assemblies 5 and 6 are then coupled to form the bottom bracket assembly 1 so that the middle planes 45 and 46 coincide and the pedal cranks are aligned. The way in which this is obtained shall be described more clearly hereafter, with reference to a method for assembling a bottom bracket assembly according to the invention.

At the end portion 27 of the shaft element 21 a shoulder 47 is also formed, with the function of an abutment for the pedal crank 17. Moreover, the shoulder 47 separates a zone with a larger diameter, coinciding with the end portion 27, and a zone with a smaller diameter of the shaft element 21.

As shown in detail in figure 7, the shoulder 47 comprises a surface 52, preferably concave, adapted to wedge into the coupling seat 50 of the pedal crank 17 to make it easier for it to be force-locked on the half-shaft 21.

The interface between the outer threading 43 on the shaft element 21 and the inner threading 51 on the pedal crank 17 is typically filled with adhesive material, to substantially avoid unscrewing during operation. In order to ensure a good hold it is necessary to avoid accumulations of adhesive material, especially in the zone close to the shoulder 47, which is the most stressed in operation. It can be observed that, thanks to the angular positioning of the thread ends A and B described above, in the assembled configuration the distance C between the shoulder 47 and the beginning of the outer threading 43 and the distance D between a front wall 44 of the pedal crank 17 and the beginning of the inner threading 51 is about the same (figure 7). In this way the first threads of the outer threading 43 are prevented from being coupled with threads of the inner threading 51, which would create spaces for the accumulation of the adhesive material.

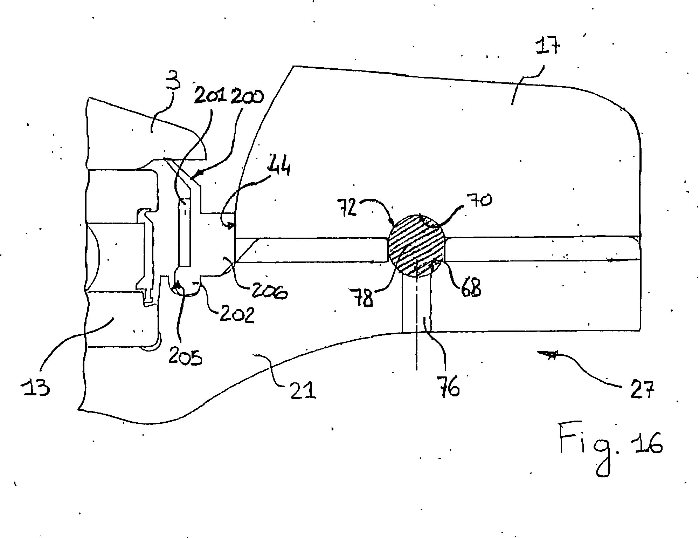

A second preferred embodiment of the invention is illustrated in figures 8-12, wherein elements structurally or functionally equivalent to those already described with reference to the first embodiment are indicated with the same reference numeral.

In this second preferred embodiment the coupling means of the shaft element 21 with the respective pedal crank 17 comprise an outer grooved profile 54 defined by crests 55 and grooves 56.

The pedal crank 17 in turn comprises, at the coupling seat 50, an inner grooved profile 57 matching the grooved profile 54, with crests 59 and grooves 60.

Although any grooved profile can be used, the grooved profile described in detail in European patent application no. 05425377.8 to the same Applicant, completely incorporated here for reference, and shown in particular in figure 12, is preferred. Such a grooved profile comprises crests and grooves defined exclusively by curved surfaces, in particular arcs of circumference, joined together.

The grooved profile 54 preferably comprises a number of crests 55 that is a multiple of the number of teeth 38 of the front toothing 25 and each tooth 38 and each throat 41 of the front toothing 25 is aligned with a crest 55 or with a groove 56 of the grooved profile 54, i.e. the respective middle planes coincide. In this case any crest 55 or any groove 56 can be used as a reference to align the pedal crank 17.

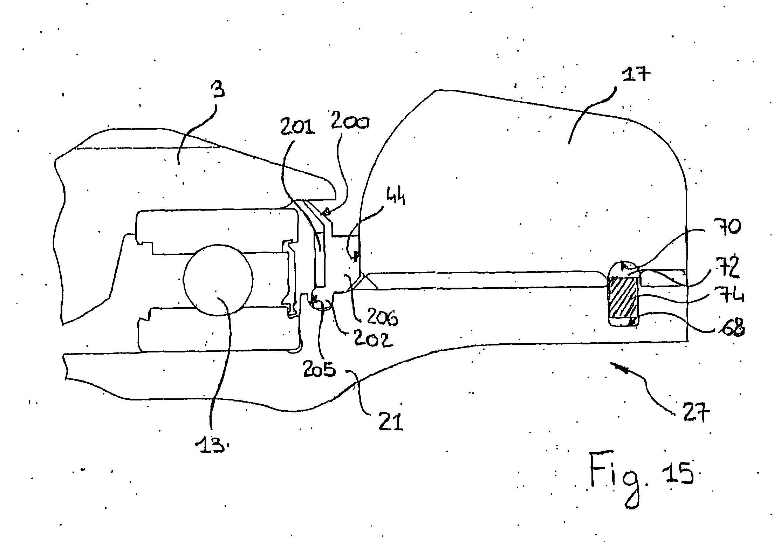

In particular, in the embodiment illustrated in detail here (figures 9, 10 and 11), the grooved profile 54 comprises forty crests 54 for twenty teeth 38 of the front toothing 25 and each tooth 38 and each throat 41 of the front toothing 25 is aligned with a groove 56 of the grooved profile 54.

The pedal crank 17 has the middle plane 48 aligned with a crest 59 of its grooved profile 57. When the pedal crank 17 is coupled with the shaft element 21 to form the crank assembly 5 the aforementioned crest 59 of the grooved profile 57 is inserted into a groove 56 of the grooved profile 54 that is aligned, as stated, with a tooth 38 or with a groove 41 of the front toothing 25. In this way the middle plane 48 of the pedal crank 17 shall also be automatically aligned with such a tooth 38 or throat 41.

Of course, in the case (non illustrated) in which each tooth 38 and each throat 41 of the front toothing 25 is instead aligned with a crest 55 of the grooved profile 54, the pedal crank 17 must have the middle plane 48 aligned with a groove 60 of its grooved profile 57.

In the crank assembly 6 (figure 10) the pedal crank 18 is coupled with the shaft element 22, preferably identical to the shaft element 21, in the same way, but, if the pedal crank 17 is aligned with respect to a tooth 38 of the front toothing 25, the pedal crank 18 must be aligned with respect to a throat 41 of the front toothing 26 and vice-versa.

In the particular case (not illustrated) in which the number of teeth 38 of the front toothings 25 and 26 is even and equal to the number of crests 55 (and of grooves 56) of the grooved profile 54 of the shaft elements 21 and 22, and of course to the number of crests 59 (and of grooves 60) of the pedal cranks 17 and 18, all of the grooves 56 can be aligned, for example, with the teeth 38. By making the pedal crank 17 with the middle plane 48 aligned with respect to a crest 59 of the respective grooved profile 57 and the pedal crank 18 with the middle plane 49 aligned with respect to a groove 60 of the respective grooved profile 57, or vice-versa, it is not necessary to worry about the position in which the pedal cranks 17, 18 are mounted onto the shaft elements 21, 22. Indeed, the pedal crank 17 shall always be mounted in alignment with a tooth 38 of the front toothing 25, whereas the pedal crank 18 shall always be mounted in alignment with a throat 41 of the front toothing 26. When the resulting crank assemblies 5 and 6 are assembled to form the bottom bracket assembly 1, it is always possible to find an engagement position of the front toothings 25 and 26 for which the pedal cranks 17 and 18 are aligned.

It should also be observed that, if the number of teeth 38 of the front toothings 25, 26 - and therefore of crests 55 and 59 of grooved profiles 54 and 57 - is odd, both of the pedal cranks 17 and 18 must be aligned with respect to a tooth 38 or, alternatively, with respect to a throat 41.

The crank assemblies 5, 6 comprise locking means against the axial sliding of the pedal cranks 17, 18 with respect to the shaft elements 21, 22. Such locking means have a preferred use in the case in which the coupling is a shape coupling made for example, through the grooved profiles described above, to substantially avoid the possibility of the pedal cranks 17, 18 coming away from the respective shaft elements 21, 22 during operation. The locking means can however also be advantageously provided in the case of other types of coupling, for example threaded couplings, to increase the axial locking of the pedal cranks on the respective shaft elements or to make it more secure.

With reference to the crank assembly 5, the aforementioned locking means can for example comprise a first and a second surface extending radially from the second end portion 27 of the shaft element 21, between which the pedal crank 17 is positioned in abutment. In particular the first radial surface can be defined at the shoulder 47 and the second radial surface can be defined by a radial projection 62 that extends circumferentially at the axially outer side of the end portion 27, preferably along the entire perimeter thereof (figure 8). The radial projection 62 can for example be obtained by calking after the assembly of the pedal crank 17. In this way, the shoulder 47 and the radial projection 62 provide abutments on opposite sides to the pedal crank 17, axially immobilising it.

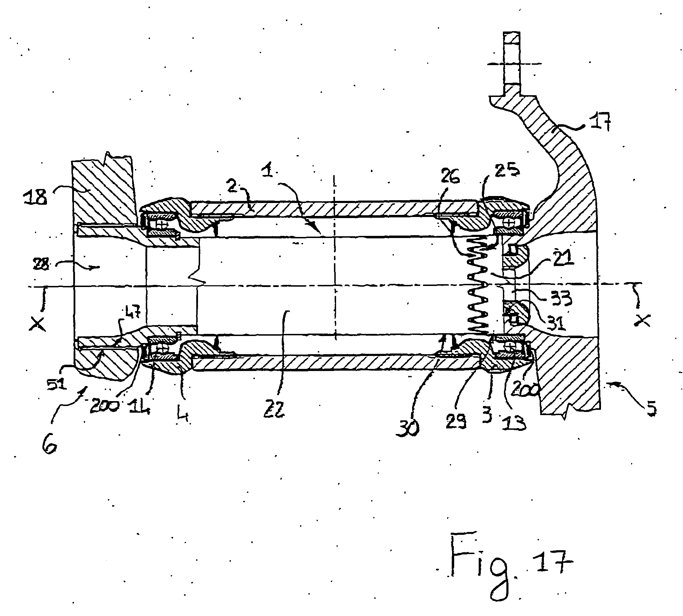

Figures 13 and 14 show a variant of the locking means against axial sliding, wherein the abutment of the pedal crank 17 is provided by an annular wall 64, formed on the pedal crank itself, which abuts on an axially outer annular face 66 of the end portion 27 of the shaft element 21. The end portion 27 also has an annular recess 68 interfacing with a corresponding annular recess 70 in the coupling seat 50 of the pedal crank 17, so as to form a seat 72. In the seat 72 an elastic element 74, for example an O-ring, is inserted that locks the axial sliding of the pedal crank 17 with respect to the shaft element 21.

Figure 15 shows another variant of the locking means against axial sliding that does not need the annular wall 64, since the annular recess 68 is sufficiently deep to completely contain the elastic element 74 in compressed state during the assembly step of the pedal crank 17. At the time when, during assembly, the annular recess 70 in the coupling seat 50 of the pedal crank 17 faces onto the annular recess 68, the elastic element 74 partially comes out from the latter and is inserted into the first one, locking the pedal crank 17.

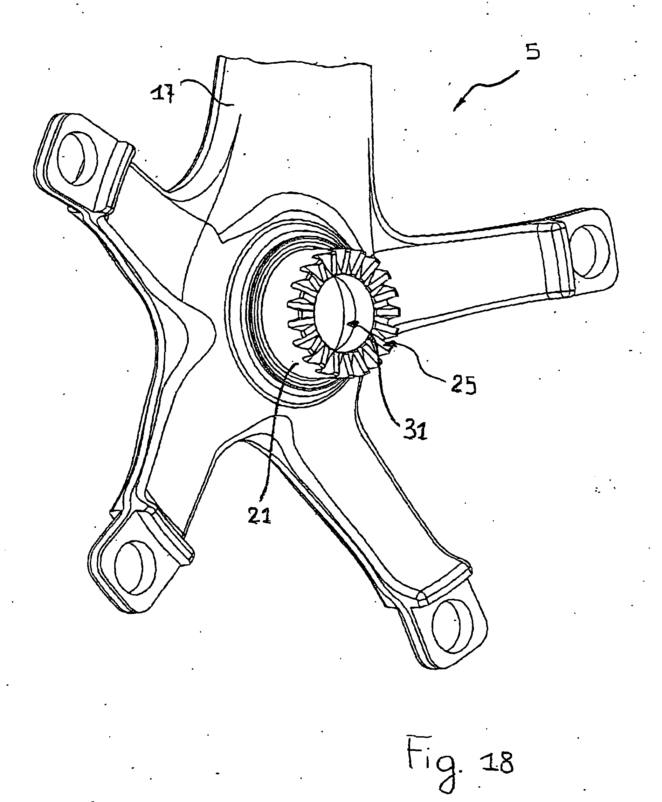

Figure 16 shows a further variant of the locking means against axial sliding, wherein the elastic element 74 is replaced by hardenable material, for example a thermoplastic or thermosetting polymeric material, such as an epoxy or phenolic resin, introduced through a hole 76 at the end portion 27 of the shaft element 21, which places the seat 72 in communication with the outside. When the resin has hardened it constitutes a rigid locking element 78 that prevents the axial sliding of the pedal crank 17.

In figures 17, 18 an alternative embodiment of a bottom bracket assembly according to the invention is shown. In such figures elements that are structurally or functionally equivalent to those already described previously are also indicated with the same reference numeral.

In this case, the crank assemblies 5, 6 comprise shaft elements 21, 22 of different length and associated with the pedal cranks 17, 18 integrally and through threaded coupling, respectively. The shaft elements 5, 6 comprise, at the second end portions 29, 30, respective front toothings 25, 26 to couple together as described above. The coupling between shaft element 22 and pedal crank 18 could alternatively be made through grooved profiles, as described above.

It should be observed that the possibility of using shaft elements 21, 22 of different length as shown in the embodiment of figures 17 and 18 can be extended in general to all of the embodiments described previously.

Irrespective of the specific embodiments described above, when the bottom bracket assembly 1 is mounted in its housing seat 2, annular gaskets 200 are arranged between the adaptor rings 3, 4 and the shaft elements 21, 22, in a position axially outside of the bearings 13, 14 (figures 1, 8, 17). As shown in detail in figures 7, 13, 15 and 16, the gaskets 200 typically comprise a metal ring 201 laterally coupled with a rubber ring 202 with inner and outer diameter respectively smaller and larger than those of the metal ring 201. The latter has the function of a rigid support whereas the rubber ring 202 comes into contact both with the outer surface of the shaft elements 21, 22 and with the inner surface of the adaptor rings 3, 4, thus insulating the bearings 13, 14 with respect to the outside.

Typically, the shaft elements 21, 22 have a seat 205 close to the shoulder 47, in which the gasket 200 is inserted. In the embodiments in which there is no shoulder 47 and the gaskets 200 may not be sufficiently supported, it is provided to use gaskets 200 in which the rubber ring 202 has, at just one side thereof opposite the one at which the metal ring is coupled 201, a projection 206, which is adapted to abut upon a front wall 44 of the pedal crank 17 or 18 (figures 13, 15 and 16).

In general, the pedal cranks 17 and 18 we have referred to can be made both from metallic material, like aluminium alloys, and from composite material. In the last case the threaded or grooved couplings have proven to be sufficiently strong as not to require an insert in the pedal crank. It is also possible to co-mould a shaft element 21 or 22 so that its second end portion 27 or 28 is incorporated in the respective pedal crank made from composite material.

The aforementioned composite material can comprise structural fibres incorporated in a polymeric material.

Preferably, the structural fibres are selected from the group consisting of: carbon fibres, glass fibres, aramidic fibres, ceramic fibres, boron fibres and combinations thereof, carbon fibres being preferred. Preferably the polymeric material is a thermosetting material, but this does not exclude the possibility of using a thermoplastic material. More preferably the polymeric material comprises an epoxy resin.

The arrangement of the structural fibres in the polymeric material can be a random arrangement of pieces or sheets of structural fibres, an ordered substantially unidirectional arrangement of fibres, an ordered substantially two-directional arrangement of fibres, or a combination of the above.

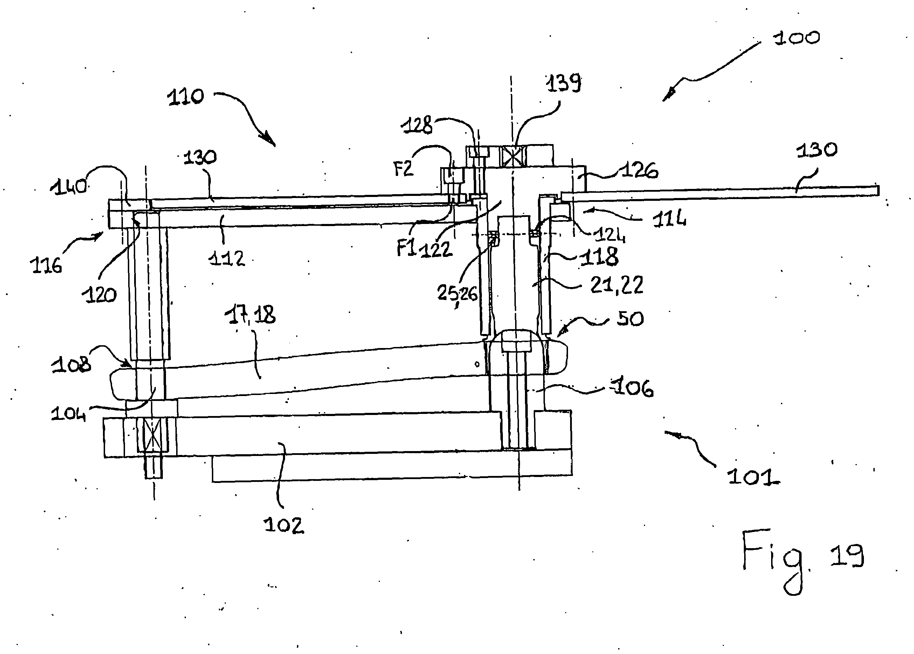

Figures 19-21 show a device for assembling a crank assembly according to the invention, in particular a crank assembly wherein the shaft element and the respective pedal crank are coupled through threading as described with reference to the embodiment of figures 1-7.

The device 100 comprises a lower part 101 and an upper part 110, resting upon one another but distinct. The lower part 101 comprises a support base 102 wherein a first pin 104 and a second pin 106 are inserted with axes parallel to each other and arranged at a distance equal to the distance in the pedal crank 17 or 18 between the coupling seat 50 and a hole 108 for the coupling with a pedal. The upper part 110 comprises a rigid rod 112 having, at opposite ends 114 and 116, respectively, a bushing 118, adapted to receive the shaft element 21 or 22, and a hole 120. The hole 120 and the bushing 118 are arranged at a distance such as to allow their alignment respectively with the first and the second pin 104 and 106.

The device 100 also comprises a shaft 122 having a front toothing 124 matching the front toothing 25 or 26 of the shaft elements 21 or 22 at a first free end, and an annular flange 126 at a second free end. The shaft 122 is rotatably inserted into the bushing 118 so that the front toothing 124 engages the front toothing 25 or 26 of the shaft element 21 or 22, previously inserted into the bushing 118, whereas the second end portion with the annular flange 126 projects outside of it. The annular flange 126 comprises a plurality of holes 128 to fix a disc 130 thereto, through screws or other conventional locking means.

The disc 130 comprises (figure 21) at the periphery of a face 131 thereof a plurality of first indicator elements 132, applied on or formed in such a face 131, which divide the perimeter of the disc 130 in a corresponding plurality of angular sectors 133 of equal size. Preferably there are the same number of first indicator elements 132 as the number of teeth 38 of the front toothings 25, 26 and 124. Optionally, each of the angular sectors 133 can be further divided through a plurality of first additional indicator elements 134.

The disc 130 is fixed to the flange 126 in such a way that the first indicator elements 132 are aligned with the middle planes of the teeth of the front toothing 124, and the possible first additional indicator elements 134 are aligned with the middle planes of the throats of such a front toothing. This can be obtained by inserting a centring pin S in a hole F1 in the disc 130, having a predetermined angular position with respect to the indicator elements 132, and in a hole F2 in the annular flange 126, having a predetermined angular position with respect to the front toothing 124.

At the first end portion of the shaft 122 an engagement recess 139 is also defined for a manoeuvring tool, like for example a torque wrench, to make the shaft 122 rotate.

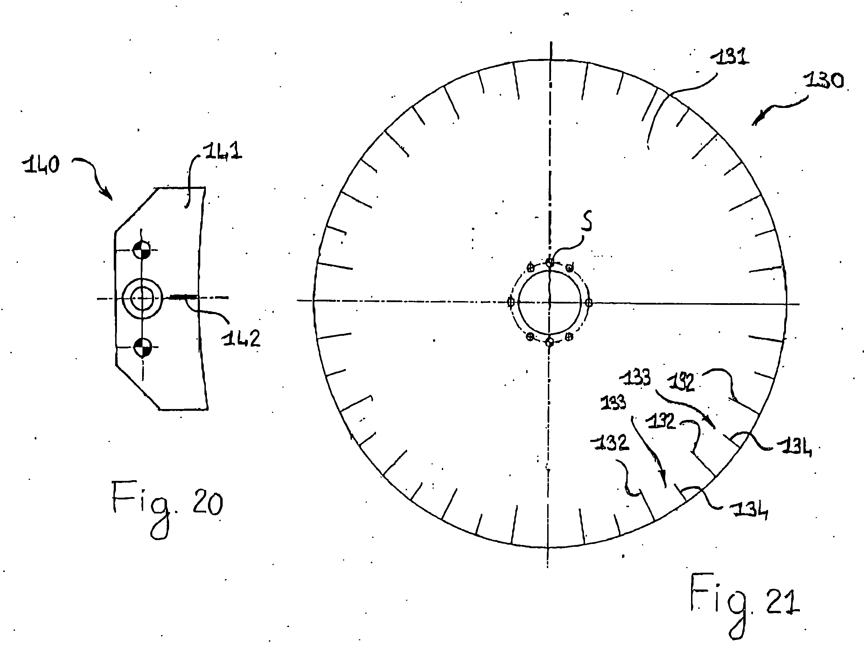

The device 100 further comprises a plate 140 mounted fixed on the rod 112 at the periphery of the disc 130 (figure 20). The plate 140 comprises, at a face 141 thereof, a second indicator element 142, applied on or formed in such a surface 131 so as to lie in a plane passing through the axes of the first and second pin 104 and 106. The second indicator element 142 is thus aligned with the middle plane of the pedal crank 17 and 18.

With particular reference to the embodiment of the bottom bracket assembly and of the crank assemblies represented in figures 1-7, a preferred embodiment of the method for assembling a crank assembly according to the invention, able to be carried out through the device 100, shall now be described.

In the case, for example, of the crank assembly 5, the pedal crank 17 is associated with the lower part 101 of the device 100 by inserting the pins 104 and 106 respectively into the hole 108 and into the coupling seat 50 of the pedal crank. The upper part 110 of the device 100 is thus positioned above the lower part 101, with the bushing 118 aligned with the second pin 106 and with the hole 120 of the rigid rod 112 coupled with the first pin 104. The shaft element 21 is inserted with its second threaded end portion 27 in the bushing 118, which is then closed on top by inserting the shaft 122 with which the disc 130 is associated, as described above. The front toothing 124 of the shaft 122 couples with the front toothing 25 of the shaft element 21, so as to make the two elements integral in rotation.

The assembly method comprises the step of making the shaft 122 rotate, for example by acting with a torque wrench that engages in the recess 139, so that the second end portion 27 of the shaft element 21 screws into the coupling seat 50, in turn internally threaded, of the pedal crank 17. The rotation is forced until the shaft element 21 is completely screwed into the coupling seat 50, i.e. until the shoulder 47 abuts upon the front wall 44 of the pedal crank 17.

At this point, thanks to the predetermined angular positioning of the thread end A on the shaft element 21 and of the thread end B on the pedal crank 17 as described above, the pedal crank 17 is very close to a position of alignment with a tooth 38. In particular, this means that one of said first indicator elements 132 on the disc 130 is closer to the second indicator element 142 on the plate 140 than the first indicator element 132 immediately before is, with respect to the direction of rotation.

With a further fraction of rotation of the shaft 122 in the direction of screwing of the shaft element 21 a precise alignment is obtained between one of the aforementioned first indicator elements 132 and the second indicator element 142 and, therefore, between the middle plane 48 of the pedal crank 17 and the middle plane of a tooth of the front toothing 124, i.e. the middle plane 46 of a throat of the front toothing 25 on the shaft element 21.

Each fraction of rotation to obtain the alignment after the shoulder 47 of the shaft element and the front wall 44 of the pedal crank 17 have gone into abutment involves a mutual axial correction advancement, which causes a preload at the interface between pedal crank 17 and shaft element 21. As described above, it is also foreseen that the shoulder 47 can partially wedge into the coupling seat 50 of the pedal crank 17, determining a deformation of one or both of the components.

In any case, the aforementioned preload must not exceed a predetermined value, dependent upon the type of material with which the pedal crank 17 and the shaft element 21 are made, so that damage does not occur that jeopardise the structural integrity of such components, possibly causing them to break.

Regarding this, it can be observed that the axial correction advancement and the preload are directly connected and it is possible to limit them to a predetermined range by suitably selecting the number of teeth 38 of the front toothing 25 and the pitch of the threadings 43 and 51 as described hereafter.

If the pitch of the threadings 43 and 51 is represented with P and the number of teeth 38 of the front toothing 25 is represented with Z, the axial advancement of the pedal crank 17 that generates the maximum preload is Av = P/2Z, which is obtained by rotating the pedal crank 17 from a position aligned with a throat 41 to a position aligned with the tooth 38 after the throat 41. Av must be less than or equal to the advancement Ae that corresponds to the reaching of limit selected from the elasticity limit, the yield limit or the breaking limit of the weakest material from that of the shaft element 21 and of the pedal crank 17, i.e. there must be, in general, P/2Z = Ae. It follows from this that a large number of teeth and/or a narrow pitch reduce the correction advancement and therefore the preload.

Preferably, the aforementioned axial correction advancement is between about 0.01 mm and about 0.5 mm, and more preferably it is equal to about 0.03 mm.

Once assembled, as described above, two crank assemblies 5 and 6 wherein the middle planes of the respective pedal cranks are respectively aligned with the middle plane 45 of a tooth 38 of the front toothing 25 and with the middle plane 46 of a throat 41 of the front toothing 26, the bottom bracket assembly 1 is assembled in accordance with the method for assembling of a bottom bracket assembly according to the invention.

Such a method comprises the step of coupling the front toothings 25 and 26 so that the aforementioned tooth 38 and the aforementioned throat 41 are angularly offset by 180° or else they are mutually engaged depending if the pedal cranks 17, 18 have pedal crank arms arranged, with respect to a plane perpendicular to the middle planes of the pedal cranks themselves and passing through the longitudinal axes of the respective shaft elements, both at the same sides at which the tooth 38 and the throat 41 are situated, or situated one on the same side where the tooth 38 (or the throat 41) is situated and the other at the opposite side to where the throat 41 (or the tooth 38) is situated.

In both cases a bottom bracket assembly 1 is obtained wherein the pedal cranks 17, 18 are aligned with each other with precision, apart from the conventional assembly and/or processing tolerances.

In general, it is not necessary to provide a visual indication for the coupling of the two crank assemblies 5 and 6 because in the case of error, i.e. if the tooth 38 and the throat 41 selected as reference elements to align the pedal cranks 17 and 18 do not have the correct mutual angular position as described above, a misalignment of many degrees is immediately noticeable between the pedal cranks 17 and 18. Nevertheless, in the eventuality in which the number of teeth of the front toothings 25, 26 is very large, and therefore such misalignment is less noticeable, it is possible to introduce a visual indication, like a bevelling, a notch or a specific colour, at the aforementioned tooth and the aforementioned throat, to immediately obtain the correct coupling between the crank assemblies 5 and 6.

## Claims

1. Shaft element (21,22) of a bottom bracket assembly (1) of a bicycle (300), comprising a first end portion (29,30) having first coupling means (25,26) with another shaft element (22,21) and a second end portion (27,28) having second coupling means (43,54) with a pedal crank (17,18), **characterised in that** said first coupling means (25,26) comprise a reference element (38,41) and said second coupling means (43,54) comprise a coupling element (A,A',55,56) having a predetermined angular position with respect to said reference element (38,41).

2. Shaft element (21,22) according to claim 1, wherein said first coupling means (25,26) comprise a front toothing (25,26) and said reference element (38,41) is defined at a tooth (38) or at a throat (41) of said front toothing (25,26) .

3. Shaft element (21,22) according to claim 2, wherein said reference element (38,41) is defined by a middle plane (45,46) of said tooth (38) or throat (41).

4. Shaft element (21,22) according to claim 2 or 3, wherein said front toothing (25,36) comprises teeth (38) that are the same as each other.

5. Shaft element (21,22) according to claim 4, wherein said front toothing (25,26) is a Hirth toothing.

6. Shaft element (21,22) according to any one of claims from 2 to 5, wherein said front toothing (25,26) comprises an even number of teeth (38).

7. Shaft element (21,22) according to any one of the previous claims, wherein said second coupling means (43,54) comprise a threading (43) having a thread end (A,A') and said coupling element (A,A',55,56) is defined by said thread end (A,A').

8. Shaft element (21,22) according to claim 7 when dependent upon claim 3, wherein said thread (A, A') lies on the middle plane (45,46) of said tooth (38) or throat (41) of said front toothing (25,26).

9. Shaft element (21,22) according to any one of claims from 1 to 6, wherein said second coupling means (43,54) comprise a grooved profile (54) and said coupling element (A,A',55,56) is defined by a crest (55) or a groove (56) of said grooved profile (54).

10. Shaft element (21,22) according to claim 9 when depending on claim 3, wherein said crest (55) or groove (56) has a middle plane coinciding with the middle plane (45,46) of said tooth (38) or throat (41) of said front toothing (25,26).

11. Shaft element (21,22) according to claim 10, wherein said grooved profile (54) comprises a number of crests (55) that is a multiple of the number of teeth (38) of said front toothing (25,26) and wherein both the teeth (38) and the throats 41) of said front toothing (25,26) are aligned with the crests (55) or with the grooves (56) of said grooved profile (54).

12. Shaft element (21,22) according to claim 10, wherein said grooved profile (54) comprises the same number of crests (55) as the number of teeth (38) of said front toothing (25,26) and wherein each crest (55) is aligned with a tooth (38) or with a throat (41) of said front toothing (25,26).

13. Shaft element (21,22) according to any one of claims from 9 to 12, wherein said crests (55) and grooves (56) of said grooved profile (54) are defined by joined curved surfaces.

14. Shaft element (21,22) according to any one of the previous claims, wherein said second end portion (27,28) has an outer diameter greater than the outer diameter of said first end portion (29,30).

15. Pedal crank (17,18) of a bicycle (300) comprising, at a coupling seat (50) with a shaft element (21,22) of a bicycle bottom bracket (300), coupling means (51,57) with said shaft element (21,22), **characterised in that** said coupling means (51,57) comprise a coupling element (B,59,60) having a predetermined angular position with respect to a middle plane (48,49) of said pedal crank (17,18).

16. Pedal crank (17,18) according to claim 15, wherein said coupling means (51,57) comprise a threading (51) having a thread end (B) and said coupling element (B,59,60) is defined by said thread end (B).

17. Pedal crank (17,18) according to claim 16, wherein said thread (B) end lies on said middle plane (48,49) of the pedal crank (17,18).

18. Pedal Crank (17,18) according to claim 15, wherein said coupling means (51,57) comprise a grooved profile (57) and said coupling element (B,59,60) is defined by a crest (59) or a groove (60) of said grooved profile (57).

19. Pedal crank (17,18) according to claim 18, wherein said crest (59) or groove (60) of said grooved profile (57) has a middle plane coinciding with said middle plane (48,49) of the pedal crank (17,18).

20. Pedal crank assembly (5,6), comprising a shaft element (21,22) according to any one of claims 1-14 and a pedal crank (17,18) according to any one of claims 15-19, said shaft element (21,22) and said pedal crank (17,18) being coupled together.

21. Pedal crank assembly (5,6) according to claim 20, wherein the coupling means (43,54) of said shaft element (21,22) and the coupling means (51,57) of said pedal crank (17,18) are mutually sized so as to determine a coupling with interference.

22. Crank assembly (5,6) according to claim 20, comprising locking means against axial sliding of said pedal crank (17,18) with respect to said shaft element (21,22).

23. Crank assembly (5,6) according to claim 22, wherein said locking means comprise two surfaces (47,62) formed at said second end portion (27,28) of the shaft element (21,22) and extending radially from said second end portion (27,28) and wherein the pedal crank (17,18) is positioned between and in abutment with said two surfaces (47,62).

24. Crank assembly (5,6) according to claim 22, wherein said locking means comprise a first annular recess (68) formed on said shaft element (21,22) at said second end portion (27,28) and a second annular recess (70) formed on said pedal crank (17,18) at said coupling seat (50) of the pedal crank (17,18) with the shaft element (21,22), wherein said first and second annular recess (68,70) face one another and form a seat (72) for a radial engagement element (74) between said shaft element (21,22) and said pedal crank (17,18).

25. Crank assembly (5,6) according to claim 24, wherein said second annular recess (70) is at least partially defined by an annular wall (64) formed on said pedal crank (17,18) at an axially outer side of said coupling seat (50) and in abutment against a front surface of said second end portion (27,28) of the shaft element (21,22).

26. Crank assembly (5,6) according to claim 24 or 25, wherein said radial engagement element (74) is an elastic element.

27. Crank assembly (5,6) according to claim 24 or 25, wherein said radial engagement element (74) is made of a hardenable material introduced in said seat (72) and subjected to hardening here.

28. Bottom bracket assembly (1) of a bicycle (300) comprising a first and a second crank assembly (5,6) coupled together, wherein at least one of said first and second crank assembly (5,6) is a crank assembly according to any one of claims 24-31.

29. Bottom bracket assembly (1) according to claim 28, wherein said first and second crank assembly (5,6) comprise respective shaft elements (21,22) of the same length.

30. Bottom bracket assembly (1) according to claim 28, wherein said first and second crank assembly (5,6) comprise respective shaft elements (21,22) of different length.

31. Bottom bracket assembly (1) according to any one of claims from 28 to 30, wherein one of said first and second crank assembly (5,6) comprises a shaft element (21,22) formed integrally with the respective pedal crank (17,18).

32. Bicycle (300) comprising a bottom bracket assembly (1) according to any one of claims 28-31.

33. Bicycle (300) according to claim 32, comprising a bicycle frame (301) having a housing seat (2) for said bottom bracket assembly (1), said housing seat (2) comprising, at axially opposite sides thereof, a pair of adaptor rings (3,4) for the assembly of respective bearings (13,14) operatively arranged between said housing seat and shaft elements (21,22) of said bottom bracket assembly (1), wherein an annular gasket (200) is arranged between each of said adaptor rings (3,4) and said shaft elements (21,22), in an axially outer position with respect to said bearings (13,14).

34. Bicycle according to claim 33, wherein said annular gasket (200) comprises a projection (206) adapted to cooperate in abutment with a front wall (44) of a pedal crank (17,18) of said bottom bracket assembly (1) facing towards said housing seat (2).

35. Device (100) for assembling a crank assembly (5,6), said crank assembly (5,6) comprising a shaft element (21,22) having a reference element (38,41) at a first end portion (29,30) and a threading (43) at a second end portion (27,28) and a pedal crank (17,18) having a threaded assembly seat (50) for the screwing engagement with said second end portion (27,28) of the shaft element (21,22), comprising fixed support means (102) for said pedal crank (17,18) and means (122) for driving said shaft element (21,22) into rotation, **characterised in that** it comprises a first indicator element (142) integral with said fixed support means (102) and aligned with a middle plane (48,49) of said pedal crank (17,18) and at least one second indicator element (132,134) integral in rotation with said rotation means (122).

36. Device (100) according to claim 35, comprising a plurality of second indicator elements (132,134).

37. Method for assembling a crank assembly (5,6) of a bottom bracket (1) of a bicycle (300, said crank assembly (5, 6) comprising:
- a shaft element (21,22) having a reference element (38,41) at a first end portion (29,30) and first coupling means (43,54) with a pedal crank (17,18) at a second end portion (27,28), said first coupling means (43,54) comprising a first coupling element (A,A',55,56) arranged at an angle α with respect to said reference element (43,54);
- a pedal crank (17,18) having a coupling seat (50) comprising second coupling means (51,57) matching said first coupling means (43,54), said second coupling means (51,57) comprising a second coupling element (B,59,60) arranged at an angle β with respect to a middle plane (48,49) of said pedal crank (17,18);
said method comprising the step of associating said pedal crank (17,18) with said shaft element (21,22) positioning said second coupling element (B,59,60) in a predetermined angular position with respect to said first coupling element (A,A',55,56).

38. Method according to claim 37, wherein α=β and wherein the step of associating said pedal crank (17,18) with said shaft element (21,22) comprises the step of aligning said first (B,59,60) and second coupling element (A,A',55,56).

39. Method for assembling a bottom bracket (1) of a bicycle (300) comprising the steps of:
- assembling a first crank assembly (5) coupling a first shaft element (21) with a first pedal crank (17), wherein said first shaft element (21) has a first reference element (38,41) lying on the middle plane (48) of said first pedal crank (17);
- assembling a second crank assembly (6) coupling a second shaft element (22) and a second pedal crank (17), wherein said second shaft element has a second reference element (41,38) lying on the middle plane (49) of said second pedal crank (18);
- coupling said first and second crank assembly (5,6) positioning said first reference element (38,41) at a predetermined angular position with respect to said second reference element (41,38).

40. Method according to claim 39, wherein the pedal cranks (17,18) of said first and second crank assembly (5,6) comprise respective pedal crank arms positioned, with respect to a plane perpendicular to the middle plane (48,49) of said pedal cranks (17,18) and passing through a longitudinal axis X of the respective shaft elements (21,22), at the same side as said first (38,41) and second (41,38) reference element and the step of coupling said first and second crank assembly (5,6) comprises the step of positioning said first (38,41) and second (41,38) reference element at 180° with respect to one another.

41. Method according to claim 40, wherein the pedal crank (17,18) of one of said first and second crank assembly (5,6) comprises a respective pedal crank arm positioned, with respect to a plane perpendicular to the middle plane (48,49) of said pedal crank (17,18) and passing through a longitudinal axis X of the respective shaft element (21,22), at the same side as said first reference element (38,41), and the pedal crank (17,18) of the other of said first and second crank assembly (5,6) comprises a respective pedal crank arm positioned, with respect to a plane perpendicular to the middle plane (48,49) of said pedal crank (17,18) and passing through a longitudinal axis X of the respective shaft element (21,22), on the opposite side with respect to said second reference element (41,38), and wherein the step of coupling said first and second crank assembly (5,6) comprises the step of aligning said first (38,41) and second (41,38) reference element.
